(19) Europäisches Patentamt

European Patent Office

Office européen des brevets

(11) **EP 0 903 560 A2**

(12) **EUROPÄISCHE PATENTANMELDUNG**

(43) Veröffentlichungstag:
24.03.1999 Patentblatt 1999/12

(51) Int. Cl.⁶: **G01B 11/02**, G01D 5/26,
G01D 5/34

(21) Anmeldenummer: 98117089.7

(22) Anmeldetag: 10.09.1998

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 23.09.1997 DE 19741855

(71) Anmelder: Stapelfeldt, Kai
22559 Hamburg (DE)

(72) Erfinder: Stapelfeldt, Kai
22559 Hamburg (DE)

(74) Vertreter:
Niedmers, Ole, Dipl.-Phys.
Patentanwälte,
Niedmers & Seemann,
Van-der-Smissen-Strasse 3
22767 Hamburg (DE)

(54) **Optoelektronische Sensoreinrichtung**

(57) Es wird eine optoelektronische Sensoreinrichtung (10) vorgeschlagen, umfassend wenigstens zwei benachbart angeordnete lichtempfindliche Sensorelemente (11, 12), die bei der Beaufschlagung ihrer sensorischen Flächenbereiche (13, 14) mit Licht (15) das Fließen oder Hindurchfließen eines elektrischen Stromes ermöglichen, dessen Stärke in Abhängigkeit der Lichtintensität variiert, wobei die beiden Sensorelemente (11, 12) auf vorbestimmbare Weise elektrisch zusammengeschaltet und betreibbar sind. Die Flächenbereiche (13, 14) der Sensorelemente (11, 12) sind längs einer Geraden (16) aneinanderliegend ausgebildet, wobei die Bewegungsrichtung (17, 18) eines Objekts (19) im wesentlichen orthogonal zur Normalenrichtung des Einfalls des Lichts (15) auf die Flächenbereiche (13, 14) unter einem spitzen Winkel α zur Geraden (16) verläuft.

Fig. 2

**Beschreibung**

Die Erfindung betrifft eine optoelektronische Sensoreinrichtung, umfassend wenigstens zwei benachbart angeordnete lichtempfindliche Sensorelemente, die bei der Beaufschlagung ihrer sensorische Flächenbereiche mit Licht das Fließen oder Hindurchfließen eines elektrischen Stromes ermöglichen, dessen Stärke in Abhängigkeit der Lichtintensität variiert, wobei die beiden Sensorelemente auf vorbestimmbare Weise elektrisch zusammengeschaltet und betreibbar sind.

Optoelektronische Sensoreinrichtungen dieser Art werden für viele sensorische Zwecke eingesetzt, beispielsweise um definierte Schaltpunkte zu erzeugen, wenn sich ein Objekt, das ein Papierbogen, ein Werkstück, ein Faden oder dergleichen sein kann, den lichtempfindlichen Flächenbereiche derartiger optoelektronischer Sensoreinrichtungen nähert bzw. Licht, das auf derartige Sensorbereiche geleitet bzw. fokussiert geleitet wird, eben durch ein derartiges Objekt abgedeckt wird. Ein Grundproblem bei derartigen optoelektronischen Sensoren ist, daß man bestrebt ist, mit verhältnismäßig einfachen Mitteln einen definierten Schaltpunkt zu erzeugen, wenn sich das Objekt, das den Schaltvorgang auslösen soll, bestimmungsgemäß den sensorischen Flächenbereichen der optoelektronischen Sensoreinrichtung genähert hat. Diesem Ziel steht grundsätzlich entgegen, daß derartige sensorische Flächenbereiche von Sensorelementen konstruktiv nicht unendlich klein ausgestaltet sein können, da nur dann, wenn dieses möglich wäre, auf sehr einfache Weise ein sehr definierter Schaltpunkt erreicht werden könnte.

Man hat dieses Problem dadurch zu lösen versucht, daß man zwei Sensorelemente, die endlich große sensorische Flächenbereiche aufweisen, nach dem sogenannten Differenzlichtverfahren betreibt. Das Differenzlichtverfahren arbeitet derart, daß beispielsweise in Form von Photodioden ausgebildete Sensorelemente in einem gewissen Abstand voneinander anordnet und die sensorischen Flächenbereiche mit Licht beaufschlagt wurden, das man beispielsweise mittels einer lichtemittierenden Diode oder auch mittels anderer Lichtquellen erzeugt. Im Ruhezustand, d.h. bei ungestörtem Lichteinfall auf beide sensorischen Flächen, werden diese durch geeignete Ausrichtung des Lichts gleichmäßig beleuchtet. Durch eine elektronische Schaltungseinrichtung werden die von den Sensorelementen bzw. Photodioden herrührenden elektrischen Ströme gemessen und mittels dieser derart ausgewertet, daß ein Differenzstrom aus beiden Strömen erzeugt wird. Werden die beiden sensorischen Flächen der Photodioden mit gleicher Lichtintensität beaufschlagt, so ist die Differenz der elektrischen Ströme beider Sensoren 0. Wird jedoch zwischen der Lichtquelle und den Sensoren besagter lichtabsorbierender Gegenstand hindurchbewegt, so ist der Differenzstrom nicht mehr 0 und es kann aufgrund dieses von 0 verschiedenen Stromes ein Schaltvorgang ausgelöst werden.

Mittels geeigneter elektronischer Maßnahmen einerseits und dem Vorsehen von Blenden und Fokussierungseinrichtungen andererseits kann bei diesem bekannten Differenzlichtverfahren Störlicht bis zu einem gewissen Grade unterdrückt werden. Die Empfindlichkeit der Sensorelemente kann in den meisten Fällen durch eine Einstellung der Schaltschwelle durch entsprechende Beschaltung beeinflußt werden. Im Handel erhältlich sind beispielsweise Differenzphotodioden ohne Auswerteelektronik (Siemens AG, Typ BPX48), oder eine komplette elektronische Sensoreinrichtung (Fa. Optec, Typ OPR 5001) mit zwei Photodioden als Sensorelementen und somit zwei sensorischen Flächenbereichen, die eine einstellbare Schaltschwelle aufweisen und eine integrierte Auswerteelektronik umfassen. Bei dieser Sensoreinrichtung wird nur ein Schaltvorgang ausgewertet und zur Anzeige gebracht.

Der Nachteil der bekannten optoelektronischen Sensoreinrichtung liegt im wesentlichen in dem endlichen Abstand der beiden sensorischen Flächenbereiche zueinander und der mangelnden Kompensationsmöglichkeit von Schwankungen in der Intensität der Lichtquelle. Der endliche Abstand der beiden sensorischen Flächenelemente führt dazu, daß ein bestimmter Ort, relativ zu den beiden sensorischen Flächenbereichen, an dem ein Schalten bei Annäherung eines Objekts beabsichtigt ist, für eine Annäherung bzw. Abdeckung des Objekts relativ zu den sensorischen Flächenbereichen bei einer Annäherung von einer Richtung gegenüber der Annäherung von einer entgegengesetzten Richtung geometrisch auseinanderliegt. Wenn es möglich wäre, die Empfindlichkeit der Sensorelemente einzustellen, so beispielsweise bei dem oben erwähnten Sensorelement OPR 5001, so würden sich die Schaltorte von einer Annäherung des Objekts den sensorischen Flächenelementen gegenüber von einer Richtung und der anderen, entgegengesetzten Richtung mit steigender Empfindlichkeit voneinander entfernen. Das führt dazu, daß es beispielsweise nicht oder nur unzulänglich möglich ist, die genaue Breite von Gegenständen zu bestimmen, die zwischen der Lichtquelle und den Sensorelementen bewegt werden. Wird ein Objekt, beispielsweise eine Visitenkarte, von einer Seite zur anderen Seite über die Sensorelemente bewegt, so wird zuerst die erste sensorische Fläche abgedeckt, bis es zu einem Schaltvorgang kommt. Befindet sich das Objekt vollständig über den sensorischen Flächenbereichen ist erneut ein Ruhezustand erreicht(Zurückschaltung). Wird der erste sensorische Flächenbereich im Zuge der Weiterbewegung des Objekts wieder freigegeben und somit wiederum mit Licht beaufschlagt, so wird erneut ein Schaltvorgang ausgelöst. Die vorbeschriebenen Schaltvorgänge liegen geometrisch auseinander, wodurch eine größere Breite des Objekts vorgetäuscht wird als dieses tatsächlich hat. Intensitätsschwankungen der Beleuchtungsquelle würden ebenfalls zu dem gleichen Effekt führen. Bei der oben beschriebenen Sensoreinrichtung OPR 5001 wird lediglich ein Schaftzustand ausgewertet und es ist dort nur möglich, das Objekt aus einer Richtung an die Sensoreinrichtung heranzuführen. Somit kann diese Sensoreinrichtung nicht zur Breitenbestimmung von Objekten verwendet werden.

Es gibt aber in den verschiedensten Anwendungsbereichen für derartige optoelektronische Sensoreinrichtungen die Notwendigkeit, daß eine genaue Detektion von beispielsweise einer Vorder- oder Hinterkante eines Objekts erreicht werden muß, beispielsweise bei Stanzungen aus Papier, Kartonagen, einer Objekterkennung (Breitenerkennung) von Gegenständen zur Separierung in Ablaufprozessen (Fließband, Aussortierung von Objekten mit Übermaß usw.). Desweiteren besteht die Notwendigkeit, daß für bestimmte Anwendungsfälle in der laufenden Fertigung von Objekten eine Richtungsänderung des Förder- bzw. Fertigungsprozesses erforderlich ist. Auch hierbei ist es wichtig, exakt den geometrischen Ort einer Kante eines Objekts sensorisch von beiden Richtungen zu erfassen.

Wie eingangs erwähnt stellt auch die Lichtquelle selbst, mit der die sensorischen Flächenbereiche beaufschlagt werden, eine die Meß- bzw. Erfassungsgenauigkeit von Objekten beeinflussende Komponente dar. Vielfach wird als Beleuchtungsquelle eine schon erwähnte lichtemittierende Diode verwendet, die bekannterweise in ihrer Lichtleistung mit der Umgebungstemperatur schwankt. Bei handelsüblichen lichtemittierenden Dioden wird z.B. ein Temperaturkoeffizient von -0,55 % $K^{-1}$, bezogen auf die Lichtleistung, angegeben. Diese Lichtschwankungen können normalerweise mit dem im Stand der Technik bekannten, oben beschriebenen Differenzlichtverfahren nicht kompensiert werden, vielmehr werden sie sogar verstärkt. Bei eingestellter Schaltschwelle, beispielsweise bei der Sensoreinrichtung des Typs OPR 5001, führt das zu einer Verschiebung des Schaltpunkts, d.h. exakten Schaltortes, relativ zu den sensorischen Flächenbereichen. Dadurch verschlechtert sich die geometrische Auflösung der Sensoreinrichtung insgesamt und es ist somit für die meisten Fälle, wo es auf eine definierte Kantenerkennung bzw. eine definierte Schaltschwelle ankommt, der Einsatz derartiger, im Stand der Technik bekannter Senoren nicht möglich bzw. führt nicht zu dem gewünschten Genauigkeitsziel.

Es ist somit Aufgabe der vorliegenden Erfindung, eine optoelektronische Sensoreinrichtung der eingangs genannten Art zu schaffen, die einen gleichen geometrischen Schaltort und somit Schaltpunkt für die Annäherung eines Objekts in einer Richtung relativ zu den Sensoren und in zu dieser Richtung entgegengesetzter Richtung zu den Sensoren ermöglicht, so daß eine exakte Bestimmung der Ausdehnung eines Objekts in seiner Dimension möglich ist, und zwar unabhängig von Intensitätsschwankungen des die sensorischen Flächenbereiche der Sensorelemente beaufschlagenden Lichtes ist, wobei die erfindungsgemäße optoelektronische Sensoreinrichtung sowohl große als auch kleine Objekte und bis zu einem gewissen Grade auch transparente Objekte bezüglich ihrer Dimensionen exakt erkennen kann, und wobei die Sensoreinrichtung an sich einfach im Aufbau und kostengünstig bereitstellbar sein soll.

Gelöst wird die Aufgabe gemäß der Erfindung dadurch, daß die Flächenbereiche der Sensorelemente längs einer Geraden aneinanderliegend ausgebildet sind, wobei die Bewegungsrichtung eines Objekts im wesentlichen orthogonal zur Normalenrichtung des Einfalls des Lichts auf die Flächenbereiche unter einem spitzen Winkel $\alpha$ zur Geraden verläuft.

Der Vorteil der erfindinngsgemäßen Lösung besteht im wesentlichen darin, daß dadurch bei Annäherung eines Objekts bzw. bei der Überstreichung des Objekts der sensorische Flächenbereiche, die aneinanderliegend ausgebildet sind, immer eine Abdeckung der beiden sensorischen Flächenbereiche zugleich stattfindet, wobei aber entsprechend der vorgegebenen Geometrie und Anordnung der jeweiligen sensorischen Flächenbereiche die Zunahme der Aodeckung der sensorischen Flächenbereiche durch entsprechende Weiterbewegung des Objekts über die Flächenbereiche unterschiedlich stark zu- und wieder abnimmt, wobei diese Zunahme weitgehend einer Parabelfunktion, für jeden sensorischen Flächenbereich gesondert, folgt. Bildet man die Differenz der entstehenden Parabelfunktionen für Links- und Rechtsannäherung, so erhält man wiederum zwei um den Nullpunkt gespiegelte Parabeln. Die von den Sensorelementen gelieferten bzw. die durch die Sensorelemente hindurchfließenden Ströme ändern sich entsprechend der vorbeschriebenen Abdeckung der sensorischen Flächenbereiche durch das in den Strahlengang des Lichtes von der Lichtquelle zu den sensorischen Flächenbereichen gerichteten Lichtes und folgen somit den Parabelfunktionen, d.h. der Stromverlauf folgt weitgehend dem Verlauf der Parabeln. Die Differenzbildung kann dabei mittels geeigneter elektronischer Schaltungen auf analoge und/oder digitale Weise realisiert werden.

Zwar bekäme man auch dann, wenn man in diese Parabeln eine vorbestimmbare Schaltschwelle hineinlegte, wieder unterschiedliche geometrische Schaltorte bzw. Schaltpunkte für eine Annäherung eines Objekts zu diesem Schaltort bzw. zu diesem Schaltpunkt von einer Richtung gegenüber der dazu entgegengesetzten Richtung, diese Schaltorte sind aber gegenüber der im Stand der Technik bekannten optoelektronischen Senoreinrichtung schon minimalisiert, so daß sich diese Grundversion gemäß der erfindinngsgemäßen Lösung für viele Anwendungszwecke eignet, bei denen eine bestimmte Schaltorttoleranz für Annäherung eines Objekts von zwei einander entgegengesetzten Richtungen noch akzeptiert werden kann.

Bei einer vorteilhaften Ausgestaltung des optoelektronischen Sensors liegt der spitze Winkel $\alpha$ im Bereich von 45°, womit erreichbar ist, daß die erhaltenen Parabeln für die eine Annäherungsrichtung und die dazu entgegengesetzte Annäherungsrichtung im wesentlichen identisch sind. Diese Maßnahme optimiert den Abstand der Schaltorte bzw. Schaltpunkte bei Annäherung eines Objekts relativ zu den sensorischen Flächenbereichen auf ein Minimum.

Vorteilhafterweise bilden die Flächenbereiche der beiden Sensorelemente zusammen ein Rechteck, wobei die Gerade durch die Diagonale des Rechtecks gebildet wird. Die Flächenbereiche könne in Anhängigkeit auch der mit der optoelektronischen Sensoreinrichtung durchzuführenden sensorische Aufgaben bzw. Einsatzfälle und optimal an diese

EP 0 903 560 A2

angepaßt in ihrer geometrischen Ausdehnung und Form angepaßt sein.

So ist es beispielsweise bei einer anderen vorteilhaften Ausführungsform der optoelektronischen Sensoreinrichtung denkbar, die Flächenbereiche beider Sensorelemente derart auszubilden, daß diese zusammen ein Quadrat bilden, wobei die Gerade durch die Diagonale des Quadrats gebildet wird. Die quadratische Grundform gemäß vorbeschriebener Art wird eine für viele Anwendungsfälle sinnvolle Ausgestaltung der sensorischen Flächenbereiche beider Sensorelemente darstellen.

Grundsätzlich ist es aber vorteilhafterweise ebenfalls möglich, die Flächenbereiche beider Senorelemente derart auszubilden, daß sie zusammen ein symmetrisches Vieleck bilden, wobei die Gerade durch die Symmetrielinie des Vielecks gebildet wird. Das heißt mit anderen Worten, daß sich an sich beliebige geeignete geometrische Flächenformen und Flächengrößen der sensorischen Flächenbereiche der Sensorelemente eignen, um diese bei der erfindinngsgemäßen Sensoreinrichtung zu verwenden, und zwar unter Berücksichtigung der Fertigungsmöglichkeiten der Sensorelemente schlechthin und unter Berücksichtigung der mit der Sensoreinrichtung zu bewältigenden sensorischen Aufgaben.

Bei einer anderen vorteilhaften Ausgestaltung der erfindinngsgemäßen Sensoreinrichtung sind die Flächenbereiche mit einer im wesentlichen beide Flächenbereiche gleichflächig abdeckenden Blendeneinrichtung versehen, wobei die durch die blendenfreie Fläche der Blendeneinrichtung gebildete Blendenöffnung an sich eine beliebige geeignete Form aufweisen kann. Mittels der Blende erfolgt eine Abdeckung der für die sensorische Aufgabe nicht gewünschten sensorischen Flächenbereiche. Da aber die Blendenöffnung derart auf den beiden sensorischen Flächenbereichen angeordnet ist, daß die Blendenöffnung eine Fläche der eng aneinander angrenzenden Flächenbereiche beider Sensorelemente bezüglich der Flächenform freiläßt, die gleich zur Flächenform beispielsweise der sensorischen Flächenbereiche ohne Blende ist, ergeben sich wiederum die gleichen Parabelfunktionen, wie vorangehend beschrieben. Die Verwendung der Blendeneinrichtung erlaubt jedoch vorteilhafterweise eine weitere Verfeinerung der geometrischen Auflösung und somit der Annäherung beider Schaltpunkte auf ein Minimum bei Bewegung des Objekts relativ zu den sensorischen Flächenelementen von der einen Richtung gegenüber der von der entgegengesetzten Richtung.

Grundsätzlich kann, genau wie oben im Zusammenhang mit der Form der sensorischen Flächenbereiche beschrieben, die durch die blendenfreie Fläche der Blendeneinrichtung gebildete Blendenöffnung vorzugsweise rechteckig bder vorzugsweise quadratisch sein, sie kann aber auch vorzugsweise durch ein symmetrisches Vieleck gebildet werden oder auch schlicht vorteilhafterweise kreisförmig ausgebildet sein.

Bei einer noch weiteren vorteilhaften anderen Ausbildung der optoelektronischen Sensoreinrichtung sind jeweils erste elektronische Rechenwerke vorgesehen, auf die die Ströme (Sensor- oder Photoströme) beider Sensorelemente zur Erzeugung eines jeweiligen Quotienten der beiden Ströme gebbar sind. Dadurch wird ein linearer Verlauf der Funktionen erhalten, der unabhängig von Amplituden- und/oder Intensitätsschwankungen der Lichtquelle und von Störlicht ist. Die der Quotientenbildung unterworfenen Ströme ergeben sich aus der Multiplikation mit der jeweiligen Abdeckungsfunktion der abgedeckten jeweiligen sensorischen Flächenbereiche bei Annäherung eines Objekts. Bei gleichmäßigem Lichteinfall oder totaler Abdeckung wird der so erhaltene Quotient zu 1. Störlicht addiert sich hingegen zu dem normalen licht, mit dem die Sensorelemente beaufschlagt werden. Die Summe aus Störlicht und normalem Licht wird dann mit der Funktion der Abdeckung multipliziert, so daß deswegen dadurch keine Beeinflussung erfolgt. Durch die Quotientenbildung entstehen zwei annähernd lineare Funktionen, die um ihren geometrischen Mittelpunkt gespiegelt sind. Zwar wird auch durch diese Methode noch nicht eine Identität eines Schaltortes bei der Annäherung eines Objekts von einer Richtung und einer Annäherung eines Objekts zu den Sensoren in zu dieser Richtung entgegengesetzter Richtung erreicht, die beiden so erreichbaren Schaltorte bzw. Schaltpunkte nähern sich aber sehr stark aneinander an.

Da auch bei sehr starker Annäherung der beiden Schaltpunkte, bezogen auf die Annäherung eines Objekts an die Sensorelemente aus einer Richtung und aus der zu dieser Richtung entgegengesetzten Richtung, die Sensoreinrichtung für bestimmte Einsatzzwecke immer noch nicht ausreichend präzise ist, ist es schließlich vorteilhaft, wenigstens zweite elektronische Rechenwerke vorzusehen, mit denen für entgegengesetzte Bewegungsrichtungen des Objekts im wesentlichen orthogonal zur Normalenrichtung des Einfalls des Lichts auf die Flächenbereiche für eine Bewegungsrichtung mittels einer Transformationsgleichung eine Verschiebung einer mittels des einen Sensorelements erzeugbaren Schaltschwelle gegenüber der mittels des anderen Sensorelements erzeugbaren Schaltschwelle einstellbar ist. Die mittels der Transformationsgleichung berechnete transformierte Schaltschwelle kann automatisch bei Festlegung der Schaltschwelle mittels der besagten elektronischen Rechenwerke gebildet werden. Würde man nun einen Gegenstand aus einer Richtung den beiden sensorischen Flächenbereichen nähern, so würde die so erhaltene, transformierte Schaltschwelle zum Schalten verwendet, würde man hingegen einen Gegenstand in zu der vorgenannten Richtung entgegengesetzten Richtung den beiden sensorischen Flächenbereichen nähern, so würde die normale, untransformierte Schaltschwelle zum Schalten herangezogen werden.

Die Erfindung wird nun unter Bezugnahme auf die nachfolgenden Zeichnungen und graphischen Darstellungen anhand eines Ausführungsbeispiels eingehend beschrieben. Darin zeigen:

4

| | |
|---|---|
| Fig. 1 | schematisch eine elektronische Sensoreinrichtung, wie sie im Stand der Technik bekannt ist, |
| Fig. 2 | eine optoelektronische Sensoreinrichtung gemäß der Erfindung bei der Annäherung eines zu detektierenden Gegenstandes in einer Annäherungsrichtung, |
| Fig. 3 | eine optoelektronische Sensoreinrichtung gemäß Fig. 2, jedoch bei einer zur in Fig. 2 dargestellten Annäherungsrichtung entgegengesetzten Richtung, |
| Fig. 4 | eine optoelektronische Sensoreinrichtung gemäß Fig. 2, jedoch mit einem gegenüber der Fig. 2 kleineren, zu detektierenden Gegenstand, |
| Fig. 5 | eine optoelektronische Sensoreinrichtung gemäß den Figuren 2 und 4, jedoch abgedeckt mit einer Blendeneinrichtung, |
| Fig.6 a,b | eine Abdeckungs- bzw. Abschattungsfunktion bei einer Annäherung eines Objekts zur optoelektronischen Sensoreinrichtung von einer Richtung und der dazu entgegengesetzten Richtung, bezogen auf das eine Sensorelement (A) und das andere Sensorelement (B), |
| Fig .7 a,b | die in Fig. 6 a,b dargestellten Funktionen nach der Differenzbildung in Form zweier um den Nullpunkt gespiegelter Parabeln, |
| Fig. 8 | eine zusammengefaßte, vergrößerte Darstellung der Figur 7 a bei Intensitätsschwankung des Lichts der Lichtquelle für Linksannäherung, |
| Fig. 9 | eine Funktion der Annäherung eines Objekts zu den sensorischen Flächenbereichen nach einer Quotientenbildung der Funktionen im Verhältnis des ersten zum zweiten Sensorelements, |
| Fig. 10 | eine Darstellung gemäß Fig. 9, jedoch mit einem Verhältnis des zweiten Sensorelements zum ersten Sensorelement, |
| Fig. 11 | der berechnete Quotient für das erste Sensorelement zum zweitem Sensorelement und das zweite Sensorelement zu erstem Sensorelement für beide Annäherungsrichtungen, |
| Fig. 12 | der Quotient für beide Sensorelementverhältnisse und beide Annäherungsrichtung gemäß dem Verlauf von Fig. 11, allerdings für A/B für Linksannäherung und B/A für Rechtsannäherung, |
| Fig. 13 | eine Darstellung gemäß Fig. 12, jedoch mit eingetragener transformierter Schaltschwelle und normaler Schaltschwelle und |
| Fig. 14 | ein Blockschaltbild zur Berechnung bzw. Auswertung der von den beiden Sensorelementen der optoelektronischen Sensoreinrichtung gelieferten Ströme. |

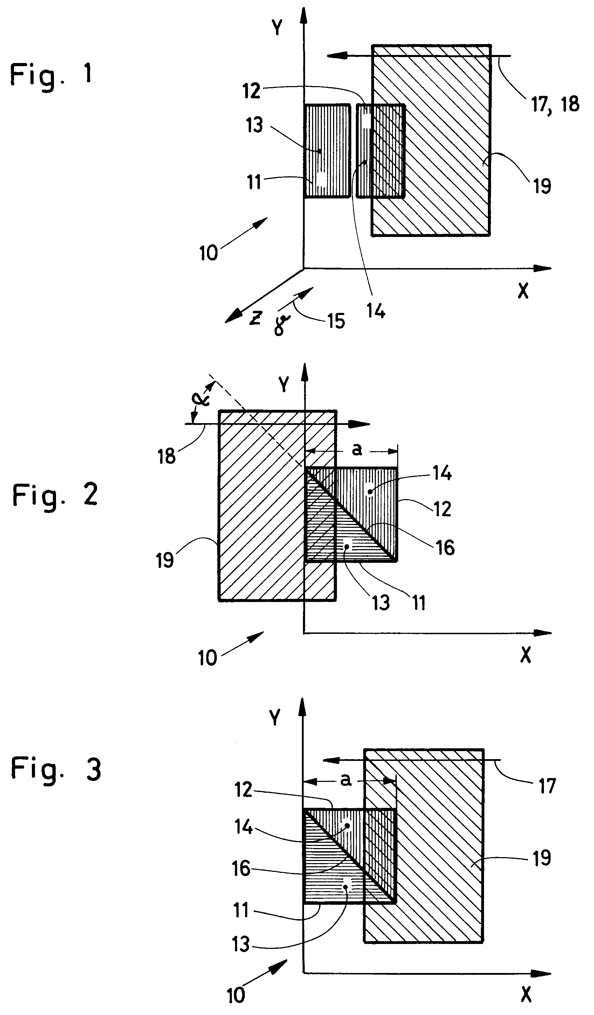

Es wird zunächst Bezug genommen auf die Darstellung gemäß Fig. 1 der Erfindung, in der eine optoelektronische Sensoreinrichtung 10 dargestellt ist, wie sie bisher im Stand der Technik bekannt ist.

Bevor die optoelektronische Sensoreinrichtung 10 gemäß Fig. 2 kurz beschrieben wird, sei vorangestellt, daß die Erfindung sich generell auf Sensorelemente 11 (A), 12 (B) bezieht, die grundsätzlich alle im Stand der Technik bekannten lichtempfindlichen Sensorelemente 11 (A), 12 (B), beispielsweise Photodioden, Phototransistoren, Photowiderstände, Selenzellen und dergleichen umfassen kann. Es wird deshalb nachfolgend lediglich allgemein von Sensorelementen 11, 12 die Rede sein, wobei die optoelektronische Sensoreinrichtung 10 anhand von in Form von Photodioden ausgebildeten Sensorelementen 11, 12, wie sie in Fig. 2 dargestellt ist, realisiert, erfolgreich erprobt und berechnet worden ist.

Bei der in Fig. 1 dargestellten optoelektronischen Sensoreinrichtung 10 sind zwei Sensorelemente 11, 12 beabstandet zueinander angeordnet. Ein Objekt 19, dessen Vorder- oder Hinterkante oder dessen diesbezügliche eindimensionale Dimension erfaßt werden soll, wird in Bewegungsrichtung 17 auf die beiden Sensorelemente 11, 12 verschoben. In bezug auf die Darstellung von Fig. 1, was gleichermaßen aber auch für die Darstellung und Erklärung zu den übrigen Fig. gilt, wird vereinbart, daß die Bewegungsrichtung 17 in Richtung des Pfeils gemäß Fig. 1 als Bewegungsrichtung nach links definiert wird, die Bewegungsrichtung in Richtung des Pfeils gemäß Fig. 2 als Richtung nach rechts definiert wird. Es versteht sich aber, daß die Sensorelemente 11, 12 an sich in der x-y-Ebene eine beliebige Ausrichtung haben können und somit auch die Bewegungsrichtungen 17, 18 relativ dazu ebenfalls eine beliebige Ausrichtung haben können. Mittels einer hier nicht gesondert dargestellten Lichtquelle fällt Licht 15 im wesentlichen orthogonal zur Normalenrichtung auf die sensorischen Flächenbereiche 13, 14, und zwar vorzugsweise parallel zu einer gedachten Z-Achse, wobei die Koordinaten X, Y, Z kartesische Koordinaten sind.

Die nicht dargestellte Lichtquelle liegt beispielsweise in einem Abstand von wenigen Zentimetern gegenüber den beiden sensorischen Flächenbereichen 13, 14 der beiden Sensorelemente 11, 12. Die beiden sensorischen Flächenbereiche 13, 14 sind bei den im Stand der Technik bekannten optoelektronischen Sensoreinrichtungen 10 voneinander beabstandet, wie es auch in Fig. 1 dargestellt ist. Durch eine Elektronikeinrichtung werden die von den Sensorelementen 11, 12 herkommenden Ströme gemessen, es wird ein Differenzstrom ermittelt und dieser wird ausgewertet. Werden die sensorischen Flächenbereiche 13, 14 mit Licht gleicher Intensität beaufschlagt, so ist die ermittelte Stromdifferenz Null. Wird jedoch zwischen der Lichtquelle und den Sensorelementen 11, 12 ein Objekt hindurchbewegt 19, so ist die Stromdifferenz von Null verschieden und es kann mittels geeigneter elektronischer Mittel daraus ein Schaltvorgang erzeugt und ausgelöst werden. Aufgrund der Beabstandung der beiden sensorischen Flächenbereiche 13, 14 bei der im Stand der Technik bekannten optoelektronischen Sensoreinrichtung 10 liegen die Schaltpunkte bzw. Schaltorte für eine Annäherung des Objekts in Bewegungsrichtung 17 gegenüber der Annäherung des Objekts 19 in Bewegungsrichtung 18 geometrisch auseinander. Würde man die Empfindlichkeit der Sensorelemente 11, 12 noch durch entsprechende Einstellung vergrößern, so würden sich die Schaltorte bzw. Schaltpunkte für eine Annäherung des Objekts 19 in Bewegungsrichtung 17 und Bewegungsrichtung 18 mit steigender Empfindlichkeit noch voneinander wegbewegen. Somit ist es mit der im Stand der Technik optoelektronischen Sensoreinrichtung 10 nicht möglich, die genaue Breite von Objekten 19 zu ermitteln, die zwischen der Lichtquelle und der optoelektronischen Sensoreinrichtung 10 hindurchbewegt werden.

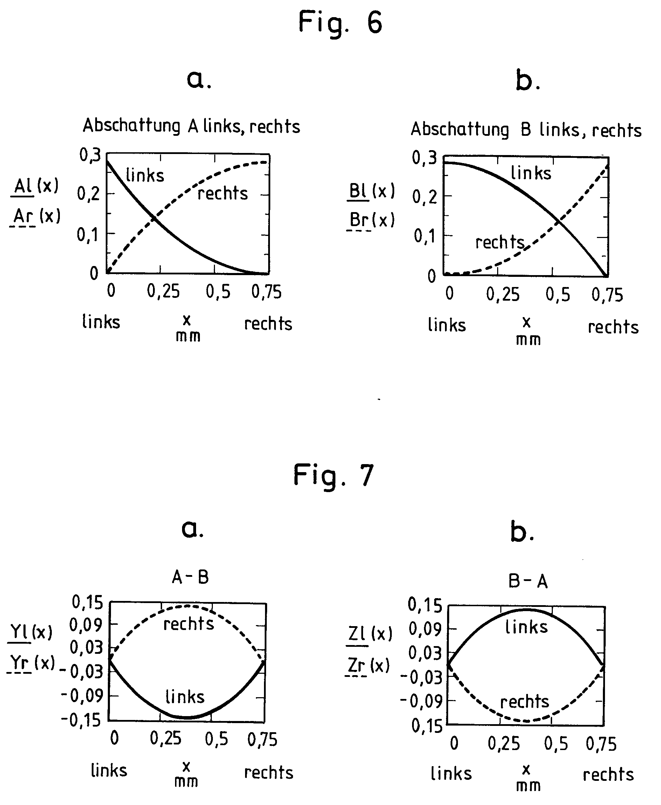

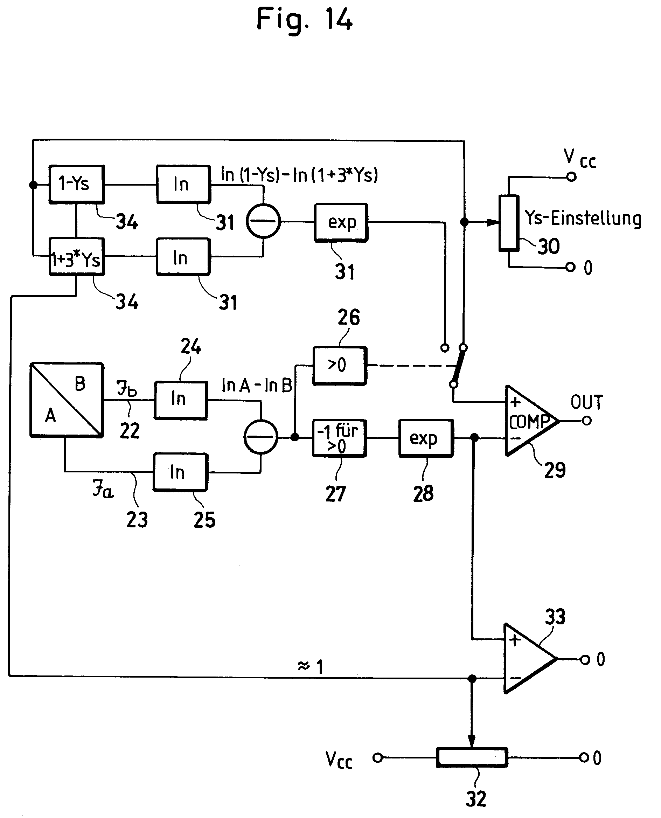

Beim Gegenstand der erfindungsgemäßen optoelektronischen Sensoreinrichtung 10, wie er in den Fig. 2 bis 4 dargestellt ist, sind die Flächenbereiche 13, 14 der Sensorelemente 11, 12 längs einer Geraden 16 aneinanderliegend ausgebildet, wobei längs der Geraden 16 auch noch ein hier nicht gesondert dargestelltes, sehr dünnes Isolationsmittel zur optischen und elektrischen Isolation beider Flächenbereiche 13, 14 voneinander vorgesehen sein kann. Die Flächenbereiche 13, 14 sind im vorliegenden Falle wie zwei kongruente, rechtwinklige Dreiecke ausgebildet, es sind aber auch beliebige andere Formen der Flächenbereiche 13, 14 möglich. Die Flächenbereiche 13, 14 bei der erfindungsgemäßen optoelektronischen Sensoreinrichtung 10 sind derart zur Bewegungsrichtung 17, 18 eines Objekts 19 ausgerichtet, daß die Bewegungsrichtung 17, 18 im wesentlichen orthogonal zur Normalenrichtung des Einfalls des Lichts auf die Flächenbereiche 13, 14 unter einem spitzen Winkel $\alpha$ zur Geraden 16 verläuft. Optimale sensorische Ergebnisse mit der erfindungsgemäßen optoelektronischen Sensoreinrichtung 10 werden dadurch erreicht, daß der spitze Winkel $\alpha$ im Bereich von 45° liegt. Die Kantenlänge der jeweiligen als rechtwinklige, gleichschenklige Dreiecke ausgebildeten sensorischen Flächenbereiche 13, 14 wird hier mit a bezeichnet, was hier allerdings nur für die mathematische Betrachtung der optoelektronischen Sensoreinrichtung 10, siehe unten, von Bedeutung ist. Die Sensorelemente 11, 12 liefern Ströme $I_a$ und $I_b$, vergleiche das Blockschaltbild gemäß Fig. 14. Wird nun ein zu detektierendes Objekt 19 entweder in der Bewegungsrichtung 18 gemäß Fig. 2 oder in der Bewegungsrichtung 17 gemäß Fig. 3 über die sensorischen Flächenbereiche 13, 14 geführt, so erfährt zunächst der eine sensorische Flächenbereich 13 eine größere Abdeckung durch das Objekt 19 als der andere sensorische Flächenbereich 14, vergleiche Fig. 2, bzw. umgekehrt der sensorische Flächenbereich 14 eine zunächst größere Abdeckung als der sensorische Flächenbereich 13, vergleiche Fig. 3. Die von den Sensorelementen 11 (A), 12 (B) somit gelieferten Ströme $I_a$ und $I_b$ folgen einer Parabelfunktion, vergleiche die Figuren 6 a,b.

Die Quotientenbildung wird nach dem Prinzip der Log-Antilog-Funktion durchgeführt, d.h.

$$A/B = e^{\ln(A/B)} = e^{\ln A - \ln B},$$

vgl . Fig. 14. Durch entsprechende Differenzbildung mittels in jeweiligen Rechenwerken der Ströme die nachfolgend voneinander subtrahiert werden, wird ein Differenzwert erzeugt, der zu zwei um den Nullpunkt gespiegelten Parabeln führt, vergleiche die Figuren 7 a und b. Für A-B bei Rechtsannäherung entsteht die obere Parabel. Für Linksannäherung die untere. Für B-A ist es umgekehrt. Um möglichst einen linearen Funktionsverlauf zu erhalten und unabhängig von Amplitudenschwankungen der Lichtquelle und Störlicht zu sein, wird eine Quotientenbildung der erzeugten Sensorströme nachfolgend durchgeführt. Die Sensorströme $I_a$, $I_b$ ergeben sich aus der Multiplikation mit der jeweiligen Abdeckungsfunktion der abgedeckten sensorischen Flächenbereiche 13, 14. Bei Gleichheit oder totaler Abdeckung der sensorischen Flächenbereiche 13, 14 wird der Quotient zu 1. Störlicht addiert sich zu dem Licht 15 und wird dann mit der Abdeckungsfunktion multipliziert und führt deswegen zu keiner Beeinflussung. Für eine Annäherung des Objekts 19 (Linksannäherung) wird der Quotient (A-links)/(B-links), siehe Fig. 14, gebildet und für eine Annäherung aus entgegengesetzter Richtung (Rechtsannäherung) der Quotient (B-rechts)/(A-rechts) gebildet. Durch diese Quotientenbildung entstehen zwei annähernd lineare Funktionen, die um den geometrischen Mittelpunkt in bezug auf die f-Achse gespiegelt sind. Legt man zwischen 0 und 1 eine Schaltschwelle hinein, so gibt es ebenfalls für Annäherung von der einen Bewegungsrichtung 17 (links) und der anderen Bewegungsrichtung 18 (rechts) verschiedene Schaltpunkte bzw. -orte. Um dieses zu vermeiden, wird bei Annäherung beispielsweise von Bewegungsrichtung 17 eine Schaltschwellenverschiebung durchgeführt. Die sogenannte transformierte Schaltschwelle wird automatisch bei Festlegung der Schaltschwelle mit Hilfe einer Transformationsgleichung mittels elektronischer Maßnahmen gebildet. Nähert sich ein Gegenstand beispielsweise von der Bewegungsrichtung 17 (rechts) (dieses wird aus der Differenz oder den Quotienten der Sensorströme ermittelt, so wird die transformierte Schaltschwelle zum Schalten verwendet. Nähert sich hingegen ein Gegenstand von der Bewegungsrichtung 18 (links), wird die normale, untransformierte Schaltschwelle zum Schalten herangezogen.

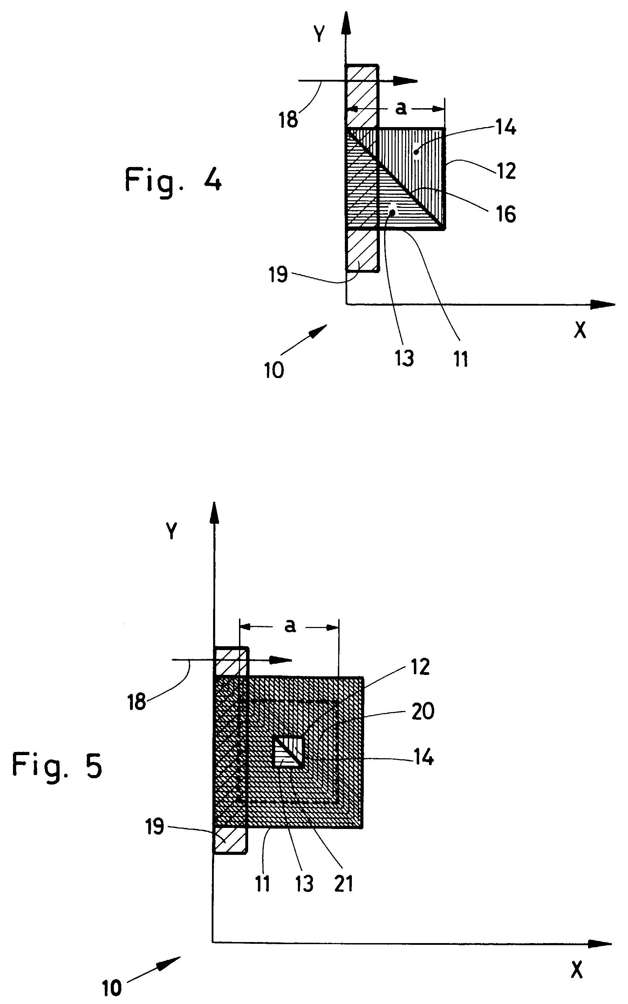

Durch das Hineinlegen von elektrischen Schaltschwellen ist es möglich, eine geometrische Verschiebung zu erzeugen. Wird die Schaltschwelle erhöht, so bewegt sich der Schaltort in Richtung der Bewegungsrichtung 17 (links), wird er erniedrigt, so bewegt er sich in Richtung der Bewegungsrichtung 18 (rechts). Hierdurch ist es möglich, die optoelektronische Sensoreinrichtung optimal an die gegebenen mechanischen Einbausituationen anzupassen. Diese Verschiebung hat aufgrund der Intensitätsunabhängigkeit von der Lichtquelle keinen Einfluß auf das Schaltverhalten der Sensoreinrichtung. Die geometrische Auflösung kann durch die Wahl der Schaltschwelle beliebig verfeinert werden. Wird eine quadratische Blendeneinrichtung 20, die allerdings nicht zwingend quadratisch sein muß und eine Blendenöffnung 21 aufweist, auf die sensorischen Flächenbereiche 13, 14, vergleiche Fig. 5, aufgebracht, so ergeben sich grundsätzlich die gleichen Abdeckungsfunktionen wie ohne Blendeneinrichtung 20. Dies bedeutet, daß man durch eine weitere Verkleinerung der sensorischen Flächenbereiche 13, 14 auch eine Vergrößerung des geometrischen Auflösungsvermögens erhält.

Mit Hilfe der optoelektronischen Sensoreinrichtung 10 können in einfacher Weise Justageprobleme gelöst werden. Beim Aufbringen von sehr feinen Blendeneinrichtungen 20 auf bestehende optische Komponenten könnte man mit der Anordnung von zwei Sensorelementen 11 (A), 12 (B) gemäß der Erfindung als sogenannte Justagesensoren für eine Serienfertigung von Objekten 19 eine sehr genaue und automatische Positionierung erreichen. Die Justage der Objekte 19 könnte unter einem Mikroskop durchgeführt werden, wobei die geometrischen Schaltschwellen an den Kanten des Objekts 19 durch elektrische Verschiebung eingestellt werden könnten. Sind die Schaltschwellen dann fest eingestellt, könnte anschließend automatisch, ohne Zuhilfenahme von Mikroskopen oder dergleichen, eine Positionierung der Objekte 19 erfolgen. Auch bei der Zentrierung runder Objekte 19 könnte die erfindungsgemäße optoelektronische Sensoreinrichtung 10 eingesetzt werden. Mit der erfindinngsgemäßen Sensoreinrichtung 10 lassen sich auch sehr kleine Objekte 19 mit hoher Präzision erkennen und sogar bis zu einem gewissen Grade transparente Objekte 19, was gegenüber den bekannten optoelektronischen Sensoreinrichtungen 10 ein sehr großer Fortschritt ist.

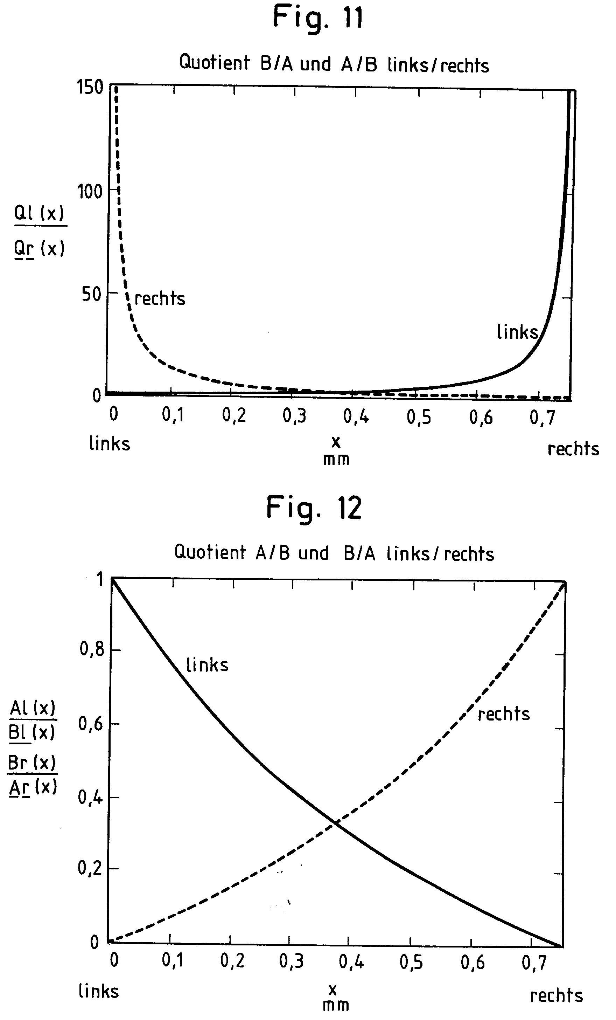

Die der optoelektronischen Sensoreinrichtung 10 zugrundeliegenden mathematischen Überlegungen werden nachfolgend kurz unter Bezugnahme auf die Figuren 6 bis 13 skizziert. Folgende Überlegungen wurden dabei angestellt:

Es wird eine Lichtintensitätsberechnung mit Hilfe der Flächenabdeckung der Sensorelemente (A, B) 11, 12 durch ein lichtundurchlässiges Objekt 19 durchgeführt. Die Breite der Abdeckung ist größer als a.

$$a = 0,75 \text{ mm z.B.}$$

$$A1(x) = \frac{(a-x)^2}{2} \qquad\qquad B1(x) = \frac{a^2}{2} - \frac{x^2}{2}$$

$$\text{Abdeckungsfunktion für Annäherung}$$
$$\text{von links für Fläche A} \qquad \text{von links für Fläche B}$$

$$Ar(x) = \frac{a^2}{2} - \frac{(a-x)^2}{2} \qquad\qquad Br(x) = \frac{x^2}{2}$$

$$\text{von rechts A} \qquad\qquad \text{von rechts B}$$

Abdeckungsfunktionen, siehe Fig. 6 a,b

Differenzbildung, siehe Fig. 7 a,b

$$Yl(x) = Al(x) - Bl(x) \qquad Zl(x) = Bl(x) - Al(x)$$

von links

$$Yr(x) = Ar(x) - Br(x) \qquad Zr(x) = Br(x) - Ar(x)$$

von rechts

Berechnung der Lichtintensitätsänderung bei Verwendung einer Lichtquelle (LED) mit einem Tk von -0,55 % $K^{-1}$ und einer Temperaturschwankung von 20°C bei Auswertung der Signale nach dem Differenzlichtverfahren für A-B und Linksannäherung.

Differenzlicht-Funktion ohne I-Schwankung:

$$Yl(x) = Al(x) - Bl(x)$$

Differenzlicht-Funktion mit I-Schwankung:

$$Ylf(x) = 0,89 * (Al(x) - Bl(x)) \; (11 \%)$$

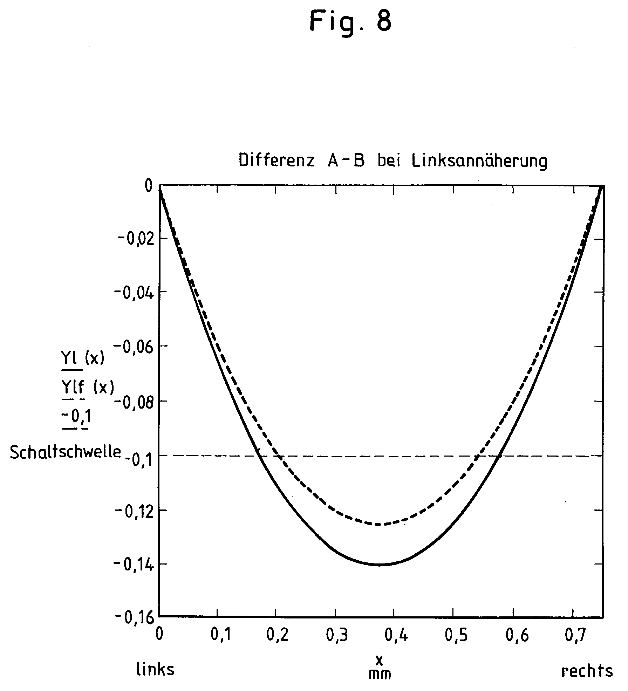

Beim Schaltvorgang kommt es durch die verschobene Kurve zu Ortsabweichungen des Schaltortes, siehe Fig. 8.

$$\text{Quotientenbildung:} \quad Wl(x) = \frac{Al(x)}{Bl(x)} \qquad Wr(x) = \frac{Ar(x)}{Br(x)}$$

von links  von rechts

$$Ql(x) = \frac{Bl(x)}{Al(x)} \qquad Qr(x) = \frac{Ar(x)}{Br(x)},$$

von links  von rechts

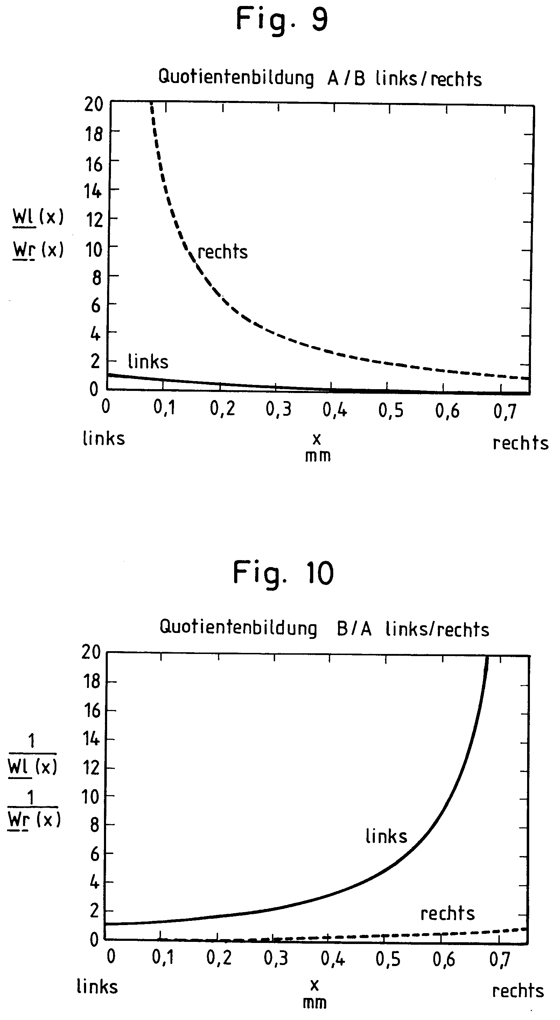

$$\text{siehe Fig. 9, 10, 11, 12}$$

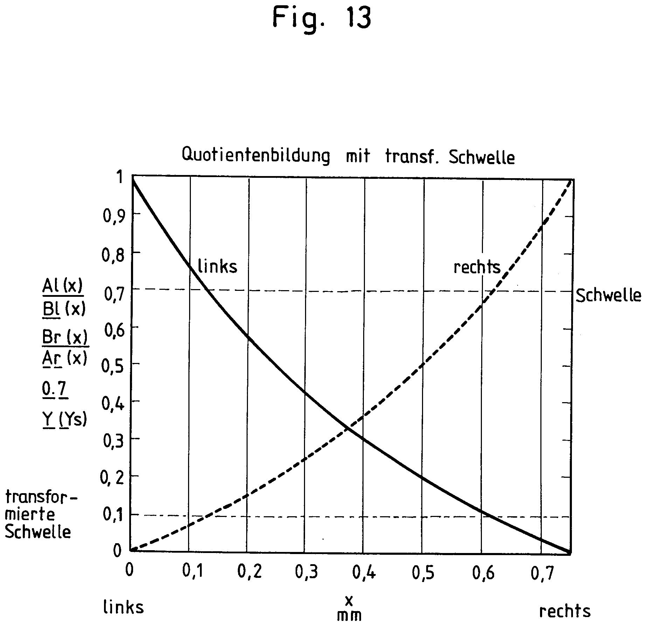

Auswertealgorithmus zur Ermittlung des gleichen Schaltorts durch X-Transformation und Verschiebung der Schaltschwelle.
Es werden die Quotienten Al/Bl für Linksannäherung und der Quotient Br/Ar für Rechtsannäherung gebildet. Die Linksannäherung wird durch die durchgezogene Kurve beschrieben, vgl. Fig. 13, die Rechtsannäherung durch die gestrichelte Kurve. Wird eine Schwelle von z.B. 0,7 hineingelegt, so ergeben sich für Links- und Rechtsannäherung unterschiedliche geometrische Schaltorte. Um das zu vermeiden, wird bei der Rechtsannäherung die sogenannte x-transformierte Schaltschwelle zum Schalten verwendet. Diese transformierte Schaltschwelle ist bestimmt durch die Transformationsgleichung Y(Ys).
Die Transformationsgleichung lautet:

$$Y(Ys) = \frac{1 - Ys}{1 + 3 * Ys} \qquad Ys = 0,7 \text{ z.B. Schaltschwelle}$$

8

$$Y(Ys) = 0{,}097 \text{ ca. } 0{,}1 \text{ transformierte Schaltschwelle}$$

Diese Gleichung ist von x unabhängig und läßt sich einfach schaltungstechnisch realisieren.

Bei Rechtsannäherung wird z.B. die transformierte Schaltschwelle verwendet und bei der Linksannäherung die untransformierte Schwelle, siehe Fig. 13.

Es wird nun Bezug genommen auf eine elektronische Schaltung, die bei der Erfindung verwendet bzw. zu dieser gehört, vgl. Fig. 14. Die Quotientenbildung wird nach dem Log-Antilog-Prinzip durchgeführt. Um $I_A/I_B$ zu bilden, wird $e^{\ln I_A - \ln I_B}$ in einem elektronischen Rechenwerk gebildet, vgl. die Bezugsziffern 24, 25, 28. 2LnA-lnB ist für Linksannäherung immer kleiner 0 und es wird dieser Wert nach dem Exponentialglied 28 einem Komparator 29 zugeführt. Dieser löst nur dann einen Schaltvorgang aus, wenn der Stromwert nach dem Exponentialglied 28 dem eingestellten Schaltschwellenwert (mit Hilfe des Schaltschwelleneinstellers 30) entspricht.

Nähert sich ein undurchsichtiges oder teilweise undurchsichtiges Objekt 19 von rechts, so ist die Differenz von $\ln I_A - \ln I_B$ immer größer als 0. Um nun den Quotienten $I_B/I_A$ zu bilden, wird jetzt der Wert $\ln I_A - \ln I_B$ mit Hilfe eines als Multiplizierer ausgebildeten Rechenwerks 27 mit -1 multipliziert. Dieses entspricht der Funktion lnB-lnA. Nach dem Exponentialglied 28 ergibt sich: $I_B/I_A = e^{\ln I_B - \ln I_A}$ und damit der Quotient $I_B/I_A$. Ein Schaltwerk 26 sorgt dafür, daß jetzt die transformierte Schaltschwelle zum Schalten herangezogen wird. Die transformierte Schaltschwelle

$$Y(Ys) = \frac{1 - Ys}{1 + 3 * Ys}$$

wird entsprechend der Quotientenbildung von A/B nach dem gleichen Log-Antilog-Prinzip gebildet. Der Mittelwert (ca. 1) entsteht, wenn die Ströme $I_A$ und $I_B$ gleich sind. Da in der praktischen Ausgestaltung der sensorischen Flächenbereiche 13, 14 die Ströme bei voller Abdeckung der sensorischen Flächenbereiche 13, 14 nie genau gleich groß sind, wird der Maximalwert zweckmäßig durch einen Dunkelstromabgleich bei der Herstellung der Sensoreinrichtung 10 gebildet. Zu diesem Zweck werden die Flächen A und B vollständig abgedeckt und der hinter dem Exponentialglied 28 entstehende Spannungswert (annähernd 1) wird dann einem Komparator 33 zugeführt. Durch ein elektronisches Stellglied 32, wird der Abgleich vorgenommen. Dieses kann voll utomatisch geschehen. Ist der Spannungswert des Komparators 33 gleich 0, so ist der Spannungswert des Stellgliedes 32 gleich dem Wert des Exponentialgliedes und entspricht damit dem Maximalwert für $I_A$ ungefähr gleich $I_B$. Dieser Wert wird dann dem Schaltwerk 34 zur Funktionsbildung 1 - Ys und 1 + 3 * Ys zugeführt. Um den Maximalwert zu bilden, ist es auch denkbar, die Flächen A und B verkleinert mit einer Metallschicht versehen (zur Abdeckung) nochmals auszubilden. Diese verkleinerten Flächen versorgen dann ihrerseits wieder ein Schaltwerk 24, 25, 28 und bilden somit den Maximalwert. Dieser kann dann wiederum dem Schaltwerk 34 zugeführt werden.

Bezugszeichenliste

10 optoelektronische Sensoreinrichtung 11 Sensorelement (A) (Photodiode)
12 Sensorelement (B) (Photodiode)
13 sensorischer Flächenbereich
14 sensorischer Flächenbereich
15 Licht
16 Gerade
17 Bewegungsrichtung (entgegengesetzt zu 18)
18 Bewegungsrichtung (entgegengesetzt zu 17)
19 Objekt
20 Blendeneinrichtung
21 Blendenöffnung
22 Strom/Stromleitung
23 Strom/Stromleitung
24 Rechenwerk (Logarithmierer)
25 Rechenwerk (Logarithmierer)
26 Rechenwerk (Umschalter)
27 Rechenwerk (* -1 Multiplizierer)
28 Exponentialglied
29 Komparator

30 Schaltschwelleneinsteller
31 Quotientenbildung
32 Maximalwerteinsteller
33 Komparator
34 Differentiales Addieren und Multiplizieren

**Patentansprüche**

1. Optoelektronische Sensoreinrichtung, umfassend wenigstens zwei benachbart angeordnete lichtempfindliche Sensorelemente, die bei der Beaufschlagung ihrer sensorischen Flächenbereiche mit Licht das Fließen oder Hindurchfließen eines elektrischen Stromes ermöglichen, dessen Stärke in Abhängigkeit der Lichtintensität variiert, wobei die beiden Sensorelemente auf vorbestimmbare Weise elektrisch zusammengeschaltet und betreibbar sind, dadurch gekennzeichnet, daß die Flächenbereiche (13,14) der Sensorelemente (11,12) längs einer Geraden (16) aneinanderliegend ausgebildet sind, wobei die Bewegungsrichtung (17, 18) eines Objekts (19) im wesentlichen orthogonal zur Normalenrichtung des Einfalls des Lichts (15) auf die Flächenbereiche (13, 14) unter einem spitzen Winkel $\alpha$ zur Geraden (16) verläuft.

2. Optoelektronischer Sensor nach Anspruch 1, dadurch gekennzeichnet, daß der spitze Winkel $\alpha$ im Bereich von 45° liegt.

3. Optoelektronische Sensoreinrichtung nach einem oder beiden der Ansprüche 1 oder 2, dadurch gekennzeichnet, daß die Flächenbereiche (13, 14) beider Sensorelemente (11, 12) zusammen ein Rechteck bilden, wobei die Gerade (16) durch die Diagonale des Rechtecks gebildet wird.

4. Optoelektronische Sensoreinrichtung nach einem oder beiden der Ansprüche 1 oder 2, dadurch gekennzeichnet, daß die Flächenbereiche (13, 14) beider Sensorelemente (11, 12) ein Quadrat bilden, wobei die Gerade (16) durch die Diagonale des Quadrats gebildet wird.

5. Optoelektronische Sensoreinrichtung nach einem oder beiden der Ansprüche 1 oder 2, dadurch gekennzeichnet, daß die Flächenbereiche (13, 14) beider Sensorelemente (11, 12) zusammen ein symmetrisches Vieleck bilden, wobei die Gerade (16) durch die Symmetrielinie des Vielecks gebildet wird.

6. Optoelektronische Sensoreinrichtung nach einem oder mehreren der Ansprüche 1 bis 5, dadurch gekennzeichnet, daß die Flächenbereiche (13, 14) mit einer im wesentlichen beide Flächenbereiche (13, 14) gleichflächig abdeckenden Blendeneinrichtung (20) versehen sind.

7. Optoelektronische Sensoreinrichtung nach Anspruch 6, dadurch gekennzeichnet, daß die durch die blendenfreie Fläche der Blendeneinrichtung (20) gebildete BlendenÖffnung (21) rechteckig ist.

8. Optoelektronische Sensoreinrichtung nach Anspruch 6, dadurch gekennzeichnet, daß die durch die blendenfreie Fläche der Blendeneinrichtung (20) gebildete Blendenöffnung (21) quadratisch ist.

9. Optoelektronische Sensoreinrichtung nach Anspruch 6, dadurch gekennzeichnet, daß die durch die blendenfreie Fläche der Blendeneinrichtung (20) gebildete Blendenöffnung (21) durch ein symmetrisches Vieleck gebildet wird.

10. Optoelektronische Sensoreinrichtung nach einem oder mehreren der Ansprüche 1 bis 9, dadurch gekennzeichnet, daß jeweils erste elektronische Rechenwerke (24, 25) vorgesehen sind, auf die die Ströme (22, 23) (Sensor oder Photoströme) beider Sensorelemente (11, 12) zur Erzeugung eines jeweiligen Quotienten der beiden Ströme (22, 23) gebbar sind.

11. Optoelektronische Sensoreinrichtung nach Anspruch 10, dadurch gekennzeichnet, daß wenigstens zweite elektronische Rechenwerke (26, 27) vorgesehen sind, mit denen für entgegengesetzte Bewegungsrichtungen (17, 18) des Objekts (19) im wesentlichen orthogonal zur Normalenrichtung des Einfalls des Lichts (15) auf die Flächenbereiche (13, 14) für eine Bewegungsrichtung (17; 18) mittels einer Transformationsgleichung eine Verschiebung einer mittels des einen Sensorelements (11; 12) erzeugbaren Schaltschwelle gegenüber der mittels der des anderen Sensorelements (12; 11) erzeugbaren Schaltschwelle einstellbar ist.

Fig. 1

Fig. 2

Fig. 3

Fig. 4

Fig. 5

# Fig. 6

**a.**

**b.**

Abschattung A links, rechts

Abschattung B links, rechts

# Fig. 7

**a.**

**b.**

A – B

B – A

# Fig. 8

Differenz A-B bei Linksannäherung

# Fig. 9

### Quotientenbildung  A / B  links / rechts

$$\frac{\underline{Wl}(x)}{\underline{Wr}(x)}$$

links

rechts

x
mm

links                                                    rechts


# Fig. 10

### Quotientenbildung  B / A  links/rechts

$$\frac{\dfrac{1}{\underline{Wl}(x)}}{\dfrac{1}{\underline{Wr}(x)}}$$

links

rechts

x
mm

links                                                    rechts

# Fig. 11

### Quotient B/A und A/B links/rechts

$\dfrac{Ql(x)}{Qr(x)}$

links     $\dfrac{x}{mm}$     rechts

# Fig. 12

### Quotient A/B und B/A links/rechts

$\dfrac{Al(x)}{Bl(x)}$

$\dfrac{Br(x)}{Ar(x)}$

links     $\dfrac{x}{mm}$     rechts

# Fig. 13

# Fig. 14